# FASCICULE DE BREVET EUROPEEN

(11) **EP 0 409 938 B1**
(45) Date de publication et mention de la délivrance du brevet: **08.12.1993**
(21) Numéro de dépôt: 90901736.0
(22) Date de dépôt: 29.01.1990
(51) Int. Cl.: B62K 21/00, B62K 25/00, B62D 17/00

(54) **VEHICUE AVEC CHASSE VARIABLE DE LA ROUE DIRECTRICE**
FAHRZEUG MIT REGELBARER LENKRADSPUR
VEHICLE WITH VARIABLE PLAY OF THE STEERING WHEEL

(30) Priorité: 30.01.1989 FR 8901323
(43) Date de publication de la demande: 30.01.1991
(73) Titulaire: SBL Société Brevets Licences S.A., CH-1217 MEYRIN/GE (CH)
(72) Inventeur: SBARRO, Franco, CH-1422 Les Tuileries-de-Grandson (CH)
(74) Mandataire: Nithardt, Roland
(86) Numéro de dépôt international: CH9000018
(87) Numéro de publication internationale: WO9008687

(56) Documents cités:
- WO-A-88/05743
- FR-A- 2 533 523
- GB-A- 2 199 794
- US-A- 4 045 096

## Description

La présente invention concerne un véhicule motorisé ou tracté destiné à se déplacer sur une surface d'appui déterminée, ce véhicule comportant au moins deux roues, dont au moins une roue directrice, chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement en forme d'anneau, ce premier roulement comportant au moins un élément annulaire intérieur solidaire de ladite partie centrale de la roue et au moins un élément annulaire extérieur périphérique concentrique audit élément annulaire intérieur et solidaire de ladite partie périphérique, cette dernière portant un organe de contact correspondant à la nature de la surface d'appui du véhicule et ladite partie centrale de la roue étant liée à la structrue de base du véhicule en au moins une zone d'ancrage décentrée de la roue, dans lequel ladite roue directrice est liée à la structure de base du véhicule par au moins un second roulement disposé dans un plan perpendiculaire au plan dudit premier roulement et comprenant un élément annulaire intérieur et un élément annulaire extérieur, l'un de ces éléments annulaires intérieur ou extérieur étant solidaire de l'élément annulaire intérieur dudit premier roulement et l'autre élément annulaire extérieur ou intérieur étant solidaire de la structure de base du véhicule.

Sur des motocyclettes, et plus particulièrement sur des motocyclettes à hautes performances destinées à la compétition, le réglage approprié de la chasse de la roue directrice peut constituer un atout fondamental pour le pilote. A grande vitesse et sur ligne droite, une chasse importante augmente considérablement la stabilité du véhicule et permet au pilote d'augmenter sa vitesse au maximum en toute sécurité. En revanche, plus la chasse est importante plus le guidon est difficile à tourner. Par conséquent, il est bien évident que sur des pistes où les virages sont nombreux et serrés ou sur des routes de montagne, la chasse doit être minimale pour éviter au pilote de perdre du temps dans les virages ou d'être contraint à effectuer des efforts trop soutenus pour guider son véhicule.

Une solution à ce problème est offerte par le véhicule décrit dans la demande de brevet WO 88/05743. Ce véhicule à deux roues est pourvu d'un dispositif de réglage de la chasse et de l'angle de chasse. Ce dispositif se compose d'un ensemble de tringles articulées solidaires du cadre et qui permettent d'incliner plus ou moins la fourche de la roue avant directrice par rapport à un axe passant par le moyeu de la roue et le centre du guidon. Le réglage de cette inclinaison se fait essentiellement au moyen de deux inserts engagés aux extrémités d'une jambe de force, ce qui permet un ajustage en longueur de cet organe. Il est bien évident qu'un tel réglage de la chasse ne peut être réalisé qu'à l'arrêt du véhicule et plus précisément avant le départ pour un parcours donné. C'est en fonction du parcours que le pilote déterminera la chasse et choisira les inserts qui correspondent à un longueur prédéterminée de la jambe de force. Ce dispositif autorise par conséquent un réglage de la chasse, mais non une modification de cette chasse sur route, en fonction de la vitesse du véhicule.

Une solution idéale consisterait à réaliser un véhicule dans lequel la chasse peut être réglée en course, c'est-à-dire augmentée dans les lignes droites et réduite dans les courbes.

C'est le but que se propose d'atteindre la présente invention.

Selon l'invention, le véhicule défini ci-dessus est caractérisé en ce que l'élément annulaire du second roulement qui est solidaire de la structure de base du véhicule est monté d'une part sur au moins un bras de ladite structure de base au moyen d'un axe de pivotement et d'autre part relié à un moyen de pivotement du second roulement, de manière à pouvoir modifier la chasse de la roue directrice dudit véhicule pendant son utilisation.

Selon un mode de réalisation particulièrement avantageux, les moyens de pivotement du second roulement comportent un vérin hydraulique.

De préférence, le vérin hydraulique est du type à double effet et est alimenté en fluide hydraulique par une pompe. Ladite pompe peut être commandée par un sélecteur indépendant.

De préférence, la pompe est commandée par un dispositif mécanique couplé au sélecteur des rapports de vitesses, ce dispositif étant agencé pour engendrer une augmentation par paliers successifs de la chasse de la roue directrice du véhicule, cette augmentation correspondant à l'ordre croissant des vitesses, et une réduction par paliers successifs de cette chasse, cette réduction correspondant à l'ordre décroissant des vitesses.

D'une façon avantageuse, la pompe est couplée à un moteur électrique et ce moteur électrique est associé à un circuit d'alimentation électrique conçu pour alimenter ledit moteur pendant des intervalles de temps prédéterminés, à chaque passage de vitesse.

Ledit circuit d'alimentation électrique est de préférence agence pour faire fonctionner la pompe hydraulique dans un premier sens pour transmettre le fluide hydraulique dans le vérin de telle manière que l'inclinaison du second roulement augmente à chaque changement de vitesse lorsque les vitesses sont croissantes, et pour faire fonctionner la pompe hydraulique dans un second sens pour transmettre le fluide hydraulique dans le vérin de telle manière que l'inclinaison du second roulement diminue à chaque changement de vitesse lorsque les vitesses sont décroissantes.

Grâce à la présente invention, la chasse peut être augmentée ou diminuée à volonté pendant un trajet routier ou en course, ce qui constitue un avantage extrêmement important pour un pilote étant donné que son véhicule est placé en permanence dans des conditions de sécurité optimales sans que cela engendre une quelconque contrainte particulière pour le pilote.

La présente invention sera mieux comprise en référence à la description d'un exemple de réalisation et du dessin annexé dans lequel :
la fig. 1 représente une vue schématique d'un véhicule à deux roues selon l'invention, et
la fig. 2 représente une vue schématique de la roue directrice de ce véhicule équipée d'un dispositif de commande de sa chasse variable.

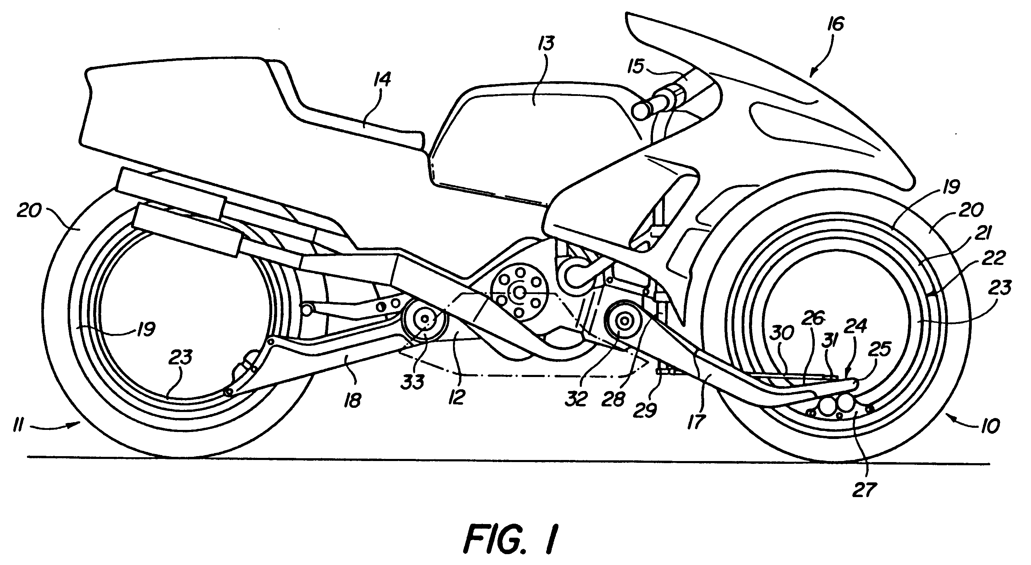

La motocyclette représentée par la fig. 1 comporte de façon connue en soi une roue avant 10, une roue arrière 11, un moteur 12, un réservoir à essence 13, un siège 14 et un guidon 15, ces différents éléments étant habillés ou recouverts d'un carénage 16. La roue avant est couplée au moteur par l'intermédiaire d'au moins un bras 17 qui peut également se présenter sous la forme d'une fourche. La roue arrière 17 est de préférence tenue par un bras unique 18 qui pourrait également être remplacé par une fourche. Chacune des roues comporte une jante 19 sur laquelle est monté un pneumatique 20. La jante 19 est fixée à un élément annulaire extérieur 21 d'un roulement à billes 22 ayant la forme d'une couronne. Les bras 17 et 18 sont respectivement fixés à un élément annulaire intérieur 23 des roulements 22 correspondant respectivement aux roues avant 10 et arrière 11.

Le bras 17 porte à son extrémité antérieure un second roulement 24, en forme de couronne, dont l'élément annulaire extérieur 25 est fixé rigidement à cette extrémité du bras 17, ou tenu par les deux branches de la fourche si le bras 17 est remplacé par une fourche, et l'élément annulaire intérieur 26 de ce second roulement 24 est fixé rigidement par l'intermédiaire d'une patte 27 à l'élément annulaire intérieur 23 du premier roulement 22 de la roue avant 10 qui est la roue directrice. Ce second roulement 24 est disposé symétriquement et perpendiculairement par rapport au plan du premier roulement. Son axe passe par le centre théorique de la roue.

On notera que le guidon 15 est relié à l'élément annulaire intérieur 25 du second roulement 24 au moyen d'une tringlerie comportant une tige 28 sensiblement verticale, articulée à son extrémité 29 à une tige sensiblement horizontale 30 qui est reliée audit élément annulaire 25 au moyen d'une rotule 31.

La ligne fictive reliant le point d'articulation du guidon 15 et le point de pivotement de la roue, qui correspond en fait au centre du second roulement, passe également par le centre théorique de la roue.

Dans cette forme de réalisation, les deux bras 17 et 18 sont directement articulés respectivement en 32 et 33 sur le bloc moteur lui-même ou sur un support de ce bloc. La suspension peut être réalisée selon différents principes connus, notamment au moyen d'une lame de ressort réalisée avec de la fibre de carbone et des amortisseurs traditionnels fixés aux bras 17 et 18.

Grâce à cette construction, et notamment grâce à la conception particulière des roues, les moyeux traditionnels lourds er encombrants ont totalement disparu et toutes les forces sont directement transmises aux roues en des points qui se situent le plus près possible de la zone de contact entre les pneumatiques et le revêtement routier.

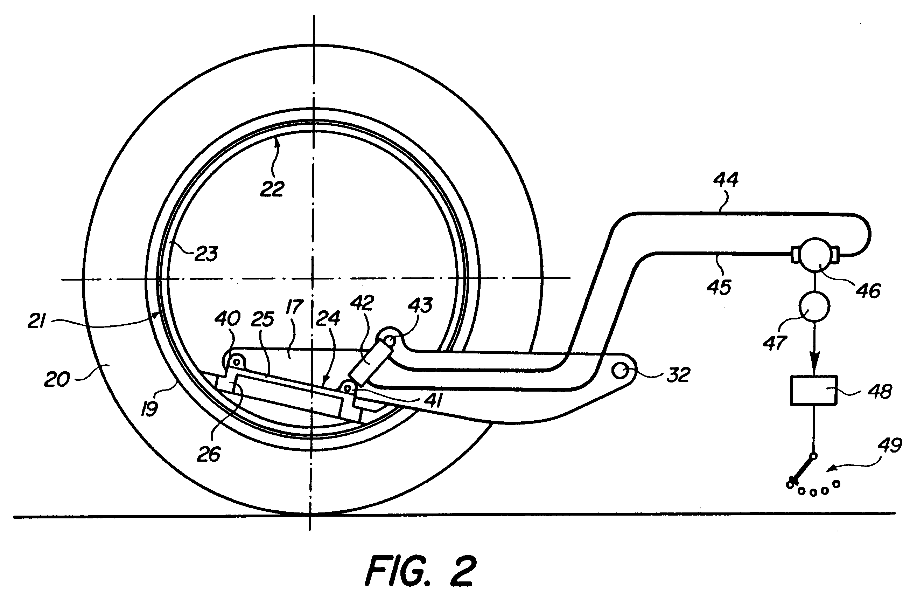

La fig. 2 est une illustration schématique dans laquelle le bras 17 comporte un axe de pivotement 40 sur lequel est monté l'élément annulaire extérieur 25 du second roulement 24. L'élément annulaire intérieur 26 du second roulement 24 est, dans l'exemple représenté, rendu solidaire de l'élément annulaire intérieur 23 du roulement 22 alors que l'élément annulaire extérieur 21 porte la jante 19 et le pneumatique 20. On notera toutefois que les rôles des deux éléments annulaires respectivement intérieur 26 et extérieur 25 du second roulement 24 pourraient être inversés. L'élément extérieur 25 du second roulement 24 est par ailleurs relié au point 41 à la tige mobile d'un vérin hydraulique 42 monté sur ledit bras 17. Le vérin 42 est un vérin hydraulique à double effet qui est alimenté à travers deux conduits respectivement 44 et 45 par une pompe hydraulique 46. Cette pompe hydraulique est entraînée par un moteur électrique 47 qui est connecté à un boîtier d'alimentation électrique 48 associé à un sélecteur 49. Un circuit électrique est conçu pour commander l'alimentation du moteur électrique 47 pendant des périodes de temps prédéterminées, chaque fois que le pilote change son rapport de vitesses. Le sélecteur 49 est couplé mécaniquement au sélecteur des vitesses de telle manière qu'à chaque augmentation de vitesse le moteur électrique 47 provoque la rotation de la pompe 46 dans un sens tel que la tige du vérin hydraulique 42 soit poussée hors du corps de ce vérin et engendre une augmentation de l'inclinaison du second roulement 24, c'est-à-dire également de la chasse de la roue directrice et, de telle manière que le passage des vitesses dans l'ordre décroissant provoque la rotation de la pompe dans l'autre sens de sorte que la tige du vérin 42 retourne à l'intérieur du corps de ce dernier, réduisant l'inclinaison du second roulement 24 et en conséquence, de la chasse de la roue directrice.

En conclusion, on peut affirmer qu'à chaque rapport de vitesses correspond une chasse déterminée de la roue directrice du véhicule à deux roues, ce qui constitue une véritable révolution dans le domaine de la conception et de l'utilisation de ces véhicules.

La présente invention n'est pas limitée aux formes de réalisation décrites mais peut subir différentes modifications et se présenter sous diverses formes évidentes pour l'homme de l'art.

## Revendications

1. Véhicule motorisé ou tracté destiné à se déplacer sur une surface d'appui déterminée, ce véhicule comportant au moins deux roues (10, 11), dont au moins une roue directrice (10), chacune de ces roues comprenant une partie centrale liée à une structure de base du véhicule et une partie périphérique concentrique à ladite partie centrale et agencée pour tourner autour de cette dernière, ladite partie centrale et ladite partie périphérique étant couplées entre elles par au moins un premier roulement (22) en forme d'anneau, ce premier roulement comportant au moins un élément annulaire intérieur (23) solidaire de ladite partie centrale de la roue et au moins un élément annulaire extérieur (21) périphérique concentrique audit élément annulaire intérieur (23) et solidaire de ladite partie périphérique, cette dernière portant un organe de contact correspondant à la nature de la surface d'appui du véhicule et ladite partie centrale de la roue étant liée à la structure de base du véhicule en au moins une zone d'ancrage décentrée de la roue, dans lequel ladite roue directrice (10) est liée à la structure de base du véhicule par au moins un second roulement (24) disposé dans un plan perpendiculaire au plan dudit premier roulement (22) et comprenant un élément annulaire intérieur (26) et un élément annulaire extérieur (25), l'un de ces éléments annulaires intérieur ou extérieur étant solidaire de l'élément annulaire intérieur (23) dudit premier roulement (22) et l'autre élément annulaire extérieur ou intérieur étant solidaire de la structure de base du véhicule, caractérisé en ce que l'élément annulaire du second roulement qui est solidaire de la structure de base du véhicule est monté d'une part sur au moins un bras (17) de ladite structure de base au moyen d'un axe de pivotement (40) et d'autre part relié à un moyen de pivotement du second roulement (24), de manière à pouvoir modifier la chasse de la roue directrice dudit véhicule pendant son utilisation.

2. Véhicule selon la revendication 1, caractérisé en ce que les moyens de pivotement du second roulement comportent un vérin hydraulique (42).

3. Véhicule selon la revendication 2, caractérisé en ce que le vérin hydraulique (42) est du type à double effet et est alimenté en fluide hydraulique par une pompe (46).

4. Véhicule selon la revendication 3, caractérisé en ce que la pompe (46) est commandée par un sélecteur indépendant (49).

5. Véhicule selon la revendication 3, caractérisé en ce que la pompe (46) est commandée par un dispositif mécanique couplé au sélecteur des rapports de vitesses, ce dispositif étant agencé pour engendrer une augmentation par paliers successifs de la chasse de la roue directrice du véhicule, cette augmentation correspondant à l'ordre croissant des vitesses, et une réduction par paliers successifs de cette chasse, cette réduction correspondant à l'ordre décroissant des vitesses.

6. Véhicule selon la revendication 5, caractérisé en ce que la pompe (46) est couplée à un moteur électrique (47) et en ce que ce moteur électrique est associé à un circuit d'alimentation électrique conçu pour alimenter ledit moteur pendant des intervalles de temps prédéterminés, à chaque passage de vitesse.

7. Véhicule selon la revendication 6, caractérisé en ce que le circuit d'alimentation électrique est agencé pour faire fonctionner la pompe hydraulique (46) dans un premier sens pour transmettre le fluide hydraulique dans le vérin (42) de telle manière que l'inclinaison du second roulement (24) augmente à chaque changement de vitesse lorsque les vitesses sont croissantes, et pour faire fonctionner la pompe hydraulique (46) dans un second sens pour transmettre le fluide hydraulique dans le vérin (42) de telle manière que l'inclinaison du second roulement (24) diminue à chaque changement de vitesse lorsque les vitesses sont décroissantes.

## Claims

1. Motorized or tractor drawn vehicle designed to travel on a particular surface, said vehicle comprising at least two wheels (10, 11) at least one of which is a drive wheel (10), each of said wheels comprising a central portion connected to a base structure of the vehicle and a peripheral portion concentric to the said central portion and disposed to turn about it, said central portion and said peripheral portion being interconnected by at least a first ring shaped bearing (22), said first bearing comprising at least one interior annular element (23) integral with the said central portion of the wheel and at least one peripheral exterior annular element (21) concentric to said interior annular element (23) and integral with the said peripheral portion, the latter having a contact means appropriate to the nature of the surface with which the vehicle will be in contact, and the said central portion of the wheel being connected to the base structure of the vehicle at at least one connection point which is off-center on the wheel, wherein the drive wheel (10) is connected to the base structure of the vehicle by at least one second bearing (24) disposed in a plane perpendicular to the plane of the first bearing (22) and comprising one annular element (26) and one exterior annular element (25) one of these interior or exterior elements being integral with the interior annular element (23) of the said first bearing (22) and the other exterior or interior element being integral with the base structure of the vehicle, characterized in that the annular element of the second bearing which is integral with the base structure of the vehicle is mounted on the one band on at least one arm (17) of the said base structure of the vehicle by means of a pivoting axle (40) and on the other hand is connected to a pivoting means of the second bearing (24) so as to modify the inclination of the drive wheel of said vehicle during its use.

2. Vehicle according to claim 1, characterized in that the pivoting means of the second bearing comprises a hydraulic piston (42).

3. Vehicle according to claim 2, characterized in that the hydraulic piston (42) is a two-way type piston and is supplied with hydraulic fluid by a pump (46).

4. Vehicle according to claim 3, characterized in that the pump (46) is controlled by an independent manual control means (49).

5. Vehicle according to claim 3, characterized in that the pump (46) is controlled by a mechanical device attached to the gearshift, said device being disposed to cause the inclination of the vehicle drive wheel to increase in successive stages, said increase corresponding to the order of shifting to higher gears, and the inclination of the drive wheel to decrease in successive stages, said decrease corresponding to the order of shifting to lower gears.

6. Vehicle according to claim 5, characterized in that the pump (46) is connected to an electric motor (47) and in that said electric motor is associated with an electrical supply circuit designed to supply the motor during predetermined time intervals, with each change of gears.

7. Vehicle according to claim 6, characterized in that the electrical supply circuit is disposed to cause the hydraulic pump (46) to function in a first direction transmitting hydraulic fluid to the piston (42) so as to increase the angle of the second bearing (24) with each shift of gears when shifting to higher gears, and to cause the hydraulic pump (46) to function in a second direction transmitting hydraulic fluid to the piston (42) so as to decrease the angle of the second bearing (24) which each shift of gears when shifting to lower gears.

## Patentansprüche

1. Motorisiertes oder angetriebenes Fahrzeug, das dazu vorgesehen ist, sich auf einer bestimmten Auflagefläche fortzubewegen, wobei dieses Fahrzeug wenigstens zwei Räder (10,11) aufweist, wovon wenigstens eines ein Lenkrad (10) ist, wobei jedes dieser Räder einen mittleren Teil aufweist, der mit einer Basisstruktur des Fahrzeuges verbunden ist und einen Umfangsteil, der konzentrisch zum genannten mittleren Teil und so angeordnet ist, daß er sich darum dreht, wobei der genannte mittlere Teil und der genannte Umfangsteil Untereinander durch wenigstens ein erstes ringförmiges Radlager (22) verbunden sind, wobei dieses erste Radlager wenigstens ein ringförmiges inneres Element (23) aufweist, das mit dem genannten mittleren Teil des Rades und wenigstens einem äußeren ringförmigen Element (21) verbunden ist, das umfangskonzentrisch zum genannten ringförmigen inneren Element (23) und mit dem genannten Umfangsteil verbunden ist, wobei letzteres ein Kontaktelement aufweist, das der Art der Auflagefläche des Fahrzeuges entspricht und der genannte mittlere Teil des Rades mit der Basisstruktur des Fahrzeuges an wenigstens einem dezentralen Verankerungsbereich des Rades verbunden ist, in dem das genannte Lenkrad (10) mit der Basisstruktur des Fahrzeuges durch wenigstens ein zweites Radlager (24) verbunden ist, das auf einer Ebene, die senkrecht zur Ebene des genannten ersten Radlagers (22) angeordnet ist und ein ringförmiges inneres Element (26) und ein ringförmiges äußeres Element (25) aufweist, wobei eines dieser ringförmigen inneren oder äußeren Elemente mit dem ringförmigen inneren Element (23) des genannten ersten Radlagers (22) und das andere ringförmige äußere oder innere Element mit der Basisstruktur des Fahrzeugs verbunden ist,
**dadurch gekennzeichnet,** daß das ringförmige Element des zweiten Radlagers, das mit der Basisstruktur des Fahrzeuges verbunden ist, einerseits auf wenigstens einem Arm (17) der genannten Basisstruktur mittels einer drehbaren Achse (40) angebracht ist und andererseits mit einer drehbaren Einrichtung des zweiten Radlagers (24) verbunden ist, und zwar so, daß der Betrag des Vor- oder Nachlaufens (Spur) des Lenkrades des genannten Fahrzeuges während des Gebrauchs geändert werden kann.

2. Fahrzeug gemäß Anspruch 1,
**dadurch gekennzeichnet,** daß die drehbare Einrichtung des zweiten Radlagers einen Hydraulikzylinder (42) aufweist.

3. Fahrzeug gemäß Anspruch 2,
**dadurch gekennzeichnet,** daß der Hydraulikzylinder (42) doppeltwirkend ist und durch eine Pumpe (46) mit Hydraulikflüssigkeit versorgt wird.

4. Fahrzeug gemäß Anspruch 3,
**dadurch gekennzeichnet,** daß die Pumpe (46) durch einen unabhängigen Schalter (49) gesteuert wird.

5. Fahrzeug gemäß Anspruch 3,
**dadurch gekennzeichnet,** daß die Pumpe (46) durch eine mechanische mit der Gangschaltung verbundene Vorrichtung gesteuert wird, wobei diese Vorrichtung so angeordnet ist, daß durch aufeinanderfolgende Lager eine Vergrößerung der Spur des Lenkrads des Fahrzeugs erzeugt wird, wobei diese Vergrößerung der aufsteigenden Reihenfolge der Geschwindigkeiten bzw. Gänge entspricht, und eine Reduktion durch aufeinanderfolgende Lager dieser Spur, wobei diese Reduktion der absteigenden Reihenfolge der Geschwindigkeiten bzw. Gänge entspricht.

6. Fahrzeug gemäß Anspruch 5,
**dadurch gekennzeichnet,** daß die Pumpe (46) mit einem Elektromotor (47) verbunden ist und daß dieser Elektromotor an einen Stromzuführungskreis angeschlossen ist, der dazu dient, den genannten Motor während vorbestimmter Zeitintervalle zu versorgen, und zwar bei jedem Gangwechsel.

7. Fahrzeug gemäß Anspruch 6,
**dadurch gekennzeichnet,** daß der Stromversorgungskreis so angeordnet ist, daß er die Hydraulikpumpe (46) betreibt, und zwar einerseits, um die Hydraulikflüssigkeit in dem Zylinder (42) so zu übertragen, daß die Neigung des zweiten Radlagers (24) bei jedem Gangwechsel zunimmt, wenn die Drehzahlen ansteigen, und um die Hydraulikpumpe (46) andererseits zu betreiben, um die Hydraulikflüssigkeit in dem Zylinder (42) so zu übertragen, daß die Neigung des zweiten Radlagers (24) bei jedem Gangwechsel abnimmt, wenn die Drehzahlen niedriger werden.
